# EUROPÄISCHE PATENTSCHRIFT

(11) **EP 3 381 298 B1**
(45) Veröffentlichungstag und Bekanntmachung des Hinweises auf die Patenterteilung: **23.12.2020**
(21) Anmeldenummer: 18164595.3
(22) Anmeldetag: 28.03.2018
(51) Int. Cl.: A23L 2/40, B65D 85/73, C02F 1/42

(54) **VERFAHREN UND VORRICHTUNG ZUR ERZEUGUNG VON KOHLENSÄURE IN TRINKWASSER**
METHOD AND DEVICE FOR PRODUCTION OF CARBONIC ACID IN DRINKING WATER
PROCÉDÉ ET DISPOSITIF DE PRODUCTION D'ACIDE CARBONIQUE DANS L'EAU POTABLE

(30) Priorität: 31.03.2017 DE 102017106945; 08.06.2017 DE 102017112609
(43) Veröffentlichungstag der Anmeldung: 03.10.2018
(73) Patentinhaber: BWT AG, 5310 Mondsee (AT)
(72) Erfinder: JOHANN, Jürgen, 69226 Nußloch (DE)
(74) Vertreter: Friderichs, Gunther

(56) Entgegenhaltungen:
- WO-A1-2013/001605
- JP-A- S62 138 424
- US-A- 2 742 363

## Beschreibung

### Gebiet der Erfindung

Die Erfindung betrifft ein Verfahren zur Erzeugung von Kohlensäure in Trinkwasser. Weiter betrifft die Erfindung eine Kartusche, welche zur Erzeugung von Kohlensäure in Trinkwasser vorgesehen ist. Die Erfindung betrifft insbesondere eine in einen Wasserbehälter, wie beispielsweise eine Wasserkanne oder ein Glas, eintauchbare Kartusche.

### Hintergrund der Erfindung

Kohlensäure wird verwendet um kohlensäurehaltiges Sprudelwasser herzustellen. Es bildet sich dabei ein Gleichgewicht aus Kohlensäure und gelöstem Kohlendioxid, wodurch das Wasser sauer ist und gleichzeitig sprudelt.

Nach dem aus der Praxis bekannten Stand der Technik wird dabei das Kohlendioxid aus Druckzylindern eingesetzt. Hierin steht das Kohlendioxid unter hohem Druck.

An der Druckflasche befindet sich ein Druckminderer, der je nach Anwendung den Druck aus der Flasche auf einen Druck von 2 bis 6 bar reduziert. Das aus der Druckflasche ausströmende Kohlendioxid wird dann in das Wasser eingemischt. Hierzu werden unterschiedliche Einmischsysteme verwendet. Das Kohlendioxid wird zum Beispiel mittels einer Lanze, an deren Ende sich eine Düse befindet, in das Wasser eingemischt.

In Wasserspendern ist es oft üblich, dass ein Druckbehälter mit Kohlendioxid mit einem bestimmten Druck, zum Beispiel 5 bar, gefüllt wird. Das Wasser wird dann mittels einer Düse in den Behälter fein versprüht. Die kleinen Wassertropfen besitzen eine große Oberfläche, über welche sich die Kohlensäure im Wasser lösen kann.

Nachteilig bei diesen Verfahren oder Vorrichtungen ist dabei, dass das Kohlendioxid in Druckflaschen eingesetzt wird. Die Druckflaschen sind Pfandflaschen und müssen immer im Austausch ersetzt werden. Weiterhin sind diese Drucktanks, aufgrund des hohen Innendruck, aus Metall und deshalb haben diese eine große Masse.

Ein weiterer Nachteil der Druckflaschen ist, dass zusätzliches Zubehör notwendig ist. Die Installation eines einstellbaren Druckminderes ist notwendig, um den gewünschten Druck zur Einmischung der Kohlensäure einstellen zu können. Des Weiteren ist der Umgang mit der Druckflache nicht ungefährlich. Sie muss gegen Umfallen geschützt werden.

Für kleinere Systeme werden kleine Druckzylinder mit ca. 8 g Kohlendioxid eingesetzt. Diese Systeme dienen zur Herstellung von Sodawasser in kleinen Mengen. Diese Druckzylinder sind ebenfalls aus Metall und werden im Pfandsystem gehandelt.

Die Offenlegungsschrift WO 2011/094677 A2 beschreibt zur Herstellung von Kohlensäure in Trinkwasser die Kombination eines Zeolith als Kohlendioxidspeicher, durch welchen eine Precusorflüssigkeit geleitet wird. Auch dieses Verfahren erfordert eine recht aufwendig gestaltete Anlage.

Das Dokument US 2,742,363 A zeigt ein Verfahren zum Erzeugen von Kohlensäure in Trinkwasser. Es ist insbesondere vorgesehen, dass Wasser durch eine Kartusche läuft, welches sodann Hydrogencarbonat auflöst, welches im Anschluss mit einem Ionenaustauscher reagiert und Kohlensäure erzeugt. Nachteilig ist, dass ein Salz im Wasser aufgelöst wird, wodurch die Leitfähigkeit steigt und das Wasser einen unangenehmen Geschmack bekommen kann. Das aufgelöste Salz kommt nämlich nur noch unzureichend in Kontakt mit dem Ionenaustauscher, so dass die AlkalimetallIonen auch nur zum Teil vom Ionenaustauscher gegen Wasserstoff ausgetauscht werden.

Das Dokument WO 2014/001605 A1 zeigt die Herstellung einer pharmazeutischen oder kosmetischen Zusammensetzung, wobei Kohlensäure durch die Reaktion eines Carbonates mit einem Ionenaustauscher erzeugt wird.

Das Dokument JP S62 138424 A zeigt einen Badezusatz, der zur Herstellung von Kohlensäure ein Carbonat sowie einen Ionenaustauscher enthält.

### Aufgabe der Erfindung

Der Erfindung liegt demgegenüber die Aufgabe zugrunde, ein Verfahren sowie eine Vorrichtung bereitzustellen, mittels der sich auf einfache Weise Kohlensäure in Trinkwasser erzeugen lässt, wobei insbesondere auf die aufwendige Bereitstellung von Kohlendioxid-Druckpatronen verzichtet werden kann. Weiter soll auf einen Rücktransport, wie er bei Druckpatronen üblich ist, verzichtet werden, was einem günstigeren CO₂-Footprint bedeutet.

### Zusammenfassung der Erfindung

Die Aufgabe der Erfindung wird bereits durch ein Verfahren zur Erzeugung von Kohlensäure in Trinkwasser nach Anspruch 1 sowie durch eine Kartusche und deren Erfindung gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft zum einen ein Verfahren zur Erzeugung von Kohlensäure in Trinkwasser.

Gemäß der Erfindung wird zur Anreicherung von Trinkwasser mit Kohlensäure eine Mischung aus einem Kationenaustauscher und einem als Carbonat ausgebildeten Feststoff verwendet, wobei der Feststoff in Anwesenheit des Kationenaustauschers in wässriger Umgebung unter Bildung von Kohlendioxid aufgelöst wird. Gemäß der Erfindung wird der Feststoff mittels des Kationenaustauschers aufgelöst.

Gemäß der Erfindung wird insbesondere zur Anreicherung von Wasser mit Kohlensäure ein Kationenaustauscher sowie ein Carbonat verwendet, welches bei Abgabe eines Kations an den Kationenaustauscher Kohlendioxid freisetzt.

Der Feststoff ist vorzugsweise als Granulat oder Pulver ausgebildet.

Der Erfindung liegt die Erkenntnis zu Grunde, dass Carbonate, insbesondere Carbonat-Salze, also sekundäre Carbonate mit zweifach negativ geladenem Carbonat-Ion, im Unterschied zu Hydrogencarbonaten, eine schlechte Löslichkeit in Wasser haben. Das Carbonatgranulat wird durch das Wasser praktisch nicht aufgelöst. Erst durch die Reaktion mit dem Ionenaustauscher, insbesondere mit einem Ionenaustauscher und dem nachfolgend beschriebenen Initiatorsalz, wird das Carbonat aufgelöst und es entsteht durch den Austausch des Alkali- oder Erdalkali-Ions des Carbonatsalzes Kohlensäure.

Gemäß der Erfindung wird zusätzlich ein weiteres Salz (Initiatorsalz) verwendet, welches die Bildung von Kohlendioxid beschleunigt. Es kann sich dabei sowohl um ein anorganisches, als auch ein organisches Salz handeln. Das weitere Salz sollte vor allem eine gute Wasserlöslichkeit aufweisen und einen guten Austausch des Kations des Salzes gegen das Wasserstoffion des Ionenaustauschers ermöglichen.

Hierzu wird erfindungsgemäß als weiteres Salz ein Salz mit einer Löslichkeit in Wasser von über 200, bevorzugt über 300 und besonders bevorzugt von über 350 g/l (bei 20 °C) verwendet.

Im Unterschied zum Feststoff (insbesondere das Carbonatsalz), der sich auflöst und aufgrund der Reaktion mit dem Ionenaustauscher eine Kohlendioxidbildung bewirkt, ist das weitere Salz (Initiatorsalz) lediglich ein Reaktionsbeschleuniger und wird vorzugsweise nicht dauerhaft chemisch umgewandelt.

Bei Verwendung eines Salzes, insbesondere eines Initiatorsalzes wie Kochsalz, erfolgt die Herstellung von Kohlensäure zunächst gegen Austausch des positiv geladenen Ions des Neutralsalzes, insbesondere des Natriumions, und, sobald dieses verbraucht ist, gegen das Alkali- oder Erdalkali-Ion des Carbonats, insbesondere des Magnesium-Ions.

Die Alkali- bzw. die Erdalkali-Ionen des Carbonats sowie des optional vorhandenen Neutralsalzes werden am Ionenaustauscher angelagert. Es wird daher gegenüber dem Stand der Technik weniger, insbesondere kein Salz ans Wasser abgegeben, so dass die Leitfähigkeit sich kaum ändert und der Geschmack des Wassers ebenfalls nicht oder kaum verändert wird.

Das Verfahren wird insbesondere derart ausgeführt, dass sich die Leitfähigkeit während der Anreicherung mit Kohlensäure um weniger als 200, vorzugsweise weniger als 100 Mikrosiemens/cm erhöht.

Durch das Initiatorsalz wird vorzugsweise aufgrund eines Ionenaustauschs von Wasserstoffionen des Ionenaustauschers gegen Kationen des Initiatorsalzes eine Säure gebildet, welche aufgrund ihrer Säurestärke die Auflösung des Carbonates, besonders zu Beginn, fördert. Hierdurch wird die weitere Reaktion (Ionenaustausch) und damit die Bildung von Kohlendioxid stark beschleunigt.

Vorzugsweise wird das Initiatorsalz in einem Volumen von mindestens 0,1 % des Volumens des Feststoffes zugegeben. Vorzugsweise wird das Initiatorsalz in einer Menge von weniger als 10 %, besonders bevorzugt weniger als 5 % des Volumens des Feststoffs zugegeben.

Die Wirkungsweise des Initiatorsalzes kann wie folgt beschrieben werden, als Salz wird hierbei beispielhaft NaCl eingesetzt.

H₂(IAT) + 2NaCl → Na₂(IAT) + 2HCl

Na₂(IAT) + 2HCl + MgCO₃ → Mg(IAT) + 2NaCl + H₂CO₃

Durch den Zusatz des Initiatorsalzes wird die Reaktion zur Kohlensäure aus dem Carbonat und den Wasserstoffionen des Ionenaustauschers beschleunigt. Es entsteht durch Zugabe von Wasser zur Mischung aus Ionenaustauscher, Salz und Carbonat spontan die Kohlensäure. Die Reaktion läuft viel schneller ab. Grund dafür ist, das schon im ersten Moment des Ionenaustauschs H⁺ gegen ein Kation, insbesondere Mg²⁺ oder Na⁺, eine Säure, insbesondere bei Verwendung von NaCl Salzsäure, entsteht, welche aufgrund ihrer Säurestärke die Auflösung des Carbonates beschleunigt.

Als Initiatorsalze können sämtliche wasserlösliche anorganischen Salze, wie zum Beispiel Sulfate, Chloride verwendet werden.

Als organische Initiatorsalze sind z.B. Malate, Ascorbate, Citrate verwendbar.

Durch die Zugabe von Ascorbaten und/oder Citraten in Magnesium oder Calciumform, wie es gemäß einer Ausführungsform der Erfindung vorgesehen ist, lassen sich Elektrolytgetränke herstellen.

Ebenso können Säuren in fester Form, wie zum Beispiel Natriumhydrogensulfat, Ascorbinsäure, Zitronensäure etc. zugesetzt werden, insbesondere um den Geschmack zu beeinflussen.

Kationenaustauscher und Feststoff können gemäß einer Ausführungsform der Erfindung in eine Kartusche oder ein Pad eingebracht sein.

Bei der Kartusche kann es sich insbesondere um ein Gehäuse, beispielsweise aus Kunststoff, handeln, welches ein Volumen bereitstellt, das mit einem mit dem Trinkwasser in Kontakt kommenden Stoff befüllt werden kann.

Die Kartusche kann eine beliebige Ausgestaltung haben. Insbesondere kann diese rechteckig oder kreiszylinderförmig ausgebildet sein.

Statt eines Kunststoffgehäuses aus rigidem Material kann gemäß einer anderen Ausführungsform der Erfindung ein Pad verwendet werden. Insbesondere kann ein Pad verwendet werden, welches aus zumindest ein oder mehreren zusammengefügten wasserdurchlässigen Flächengebilden, insbesondere aus einem Vlies, besteht.

Insbesondere in einer Pressstempelkanne (French Press) kann die Mischung aus Kationenaustauscher und Feststoff auch als lose Schüttung eingesetzt werden.

Die Kartusche oder das Pad können nach Verbrauch entsorgt werden. In der Kartusche oder dem Pad befindet sich vorzugsweise eine Mischung aus einem stark sauren Kationen- und/oder eines schwach sauren Kationenaustauschers und eines der Carbonatsalze.

Der stark saure und/oder schwach saure Kationenaustauscher befindet sich in der Wasserstoffionenform, ist also mit Wasserstoffionen beladen.

Zu den Carbonatsalzen zählen insbesondere Natriumcarbonat und Kaliumcarbonat, Calciumcarbonat und Magnesiumcarbonat. Vorzugsweise wird Calciumcarbonat und/oder Magnesiumcarbonat verwendet. Letztere beiden Salze beeinträchtigen aufgrund ihrer Wasserunlöslichkeit den Geschmack des aufbereiteten Wassers nicht. Die verhältnismäßig schwere Löslichkeit dieser Salze kann durch das vorstehend beschriebene Initiatorsalz kompensiert werden.

Insbesondere kann ein Carbonatsalz mit einer Löslichkeit in Wasser von unter 100, bevorzugt unter 10 und besonders bevorzugt unter 1 g/l (bei 20 °C) verwendet werden.

Gemäß der Erfindung umfasst die Kartusche oder das Pad auch das vorstehend beschriebene Initiatorsalz, welches die Bildung von Kohlendioxid beschleunigt, welches aber nicht wesentlich selbst zur Kohlendioxidbildung beiträgt.

Das Ionenaustauscher/Salzgemisch befindet sich vorzugsweise in einer Kartusche, einem Pad oder einer Verpackung, die vom Benutzer geöffnet werden kann, insbesondere in einem Aufreißbeutel, und wird im trockenen Zustand ausgeliefert.

Kommt Ionenaustauscher und Carbonatsalz mit Wasser in Kontakt, so laufen z.B. folgende Reaktionen ab.

H⁺-R-H⁺ + CaCO₃ → R-Ca²⁺ + H₂O + CO₂

H⁺-R-H⁺ + MgCO₃ → R-Mg²⁺ + H₂O + CO₂

Wie aus den Reaktionsgleichungen zu ersehen ist, nimmt der Ionenaustauscher das entsprechende Kation auf und nur das Kohlendioxid wird zumindest teilweise im Wasser gelöst.

Selbst bei in Wasser schwerlöslichen bzw. nahezu unlöslichen Carbonatsalzen findet ein solcher Austausch statt und startet damit die weitere Reaktion, so dass sich das Salz auflöst.

Salze (mit Ausnahme der geringen Menge an Initiatorsalz) lösen sich bei dem erfindungsgemäßen Verfahren nicht im Trinkwasser, da sie sofort mit dem Ionenaustauscher abreagieren. Somit werden im Trinkwasser keine zusätzlichen Salze gelöst.

Im Unterschied dazu würden sich beim Zusatz einer Säure, anstatt des Ionenaustauschers, welche bei der Reaktion mit Hydrogencarbonaten oder Carbonaten ebenfalls Kohlensäure bildet, zusätzliche Initiatorsalze im Trinkwasser lösen. Das Wasser schmeckt danach salzig und wäre kaum genießbar.

Bei einer bevorzugten Ausführungsform der Erfindung wird ein stark saurer oder schwach saurer Kationenaustauscher verwendet, welcher zu mehr als 10 %, vorzugsweise zu mehr als 30 % und besonders bevorzugt zu mehr als 80 % seiner Kapazität mit Wasserstoffionen beladen ist.

Unter der Kapazität des verwendeten Ionenaustauschers wird die totale Kapazität gemessen nach DIN 54403:2009-04 verstanden.

Vorzugsweise ist die Kartusche oder das Pad derart ausgebildet bzw. mit einer derartigen Menge an Kationenaustauscher und Carbonatsalz befüllt, dass ein Liter eines Trinkwasser, welches als Testwasser verwendet wird und welches einen Gehalt von 20 - 50 mg/l Kohlendioxid aufweist, durch Verwendung der Kartusche auf einen Gehalt an Kohlendioxid von mehr als 1000 mg/l, besonders bevorzugt mehr als 3000 mg/l und ganz besonders bevorzugt mehr als 6000 mg/l angereichert wird (bei 8 °C und 1300 mbar Druck).

So lässt sich mit der erfindungsgemäßen Kartusche oder einem Pad aus "normalem" stillen Trinkwasser Sprudelwasser erzeugen.

Die Kartusche oder das Pad lassen sich in einen Wasserkrug mit integrierter Wasserfiltration einsetzen. Bei einer integrierten Wasserfiltration werden mittels Wasserfilter unerwünschte Inhaltsstoffe wie zum Beispiel Chlor, Pestizide und Wasserhärte entfernt. Während der Wasserfiltration wird die Kohlensäure aus der Kartusche freigesetzt und dem gefilterten Wasser zugegeben.

Die Kartusche oder das Pad ist vorzugsweise mit einer Mischung aus einem Carbonatsalz, einem Initiatorsalz und einem Kationenaustauscher befüllt. Carbonatsalz, Initiatorsalz und Kationenaustauscher sind vorzugsweise jeweils als Granulat ausgebildet, wobei vorzugsweise die Granulate dieser Bestandteile gemischt sind.

In einer vorteilhaften Gestaltung ist die Kartusche oder das Pad in Segmente unterteilt, in welchen sich jeweils die Mischung aus Ionenaustauscher, Initiatorsalz und Carbonatsalz befindet. Vorteil dieser Ausführungsform der Erfindung ist eine gleichmäßigere Erzeugung der Kohlensäure, welche dem Wasser großflächiger zugegeben werden kann.

Die Segmente sind z.B. rechteckig, rund, oval, wabenförmig oder in einer beliebigen anderen geometrischen Querschnittsform gestaltet.

Insbesondere umfasst die Kartusche oder das Pad zumindest ein Segment, bevorzugt zumindest fünf und ganz besonders bevorzugt zumindest 10 Segmente.

Bei einer Ausgestaltung der Kartusche mit einem Gehäuse aus rigidem Material sind die Segmente vorzugsweise als durch Wände voneinander getrennte Kammern ausgebildet, wobei die einzelnen Kammern derart ausgebildet sind, dass das Ionenaustauschermaterial bzw. das Salz nicht herausfällt.

Es versteht sich, dass das Gehäuse der Kartusche wasserdurchlässig ist, insbesondere können Oberseite und Unterseite der Kartusche als Sieb ausgebildet sein.

Im Falle der Ausgestaltung als Pad können die Segmente als kissenartige Abschnitte von zwei aufeinander aufgebrachte Flächengebilden ausgestaltet sein.

Bei einer Weiterbildung der Erfindung kann die Kartusche oder das Pad neben dem Kationenaustauscher und dem

Feststoff noch weitere Substanzen zur Herstellung eines Getränks, insbesondere eines Kaltgetränks, enthalten. Dies können insbesondere wasserlösliche Aromastoffe, Süßstoffe, Mineralien, Vitamine und/oder Zucker sein,

Das erfindungsgemäße Verfahren und/oder das erfindungsgemäße Pad bzw. die Kartusche können auch verwendet werden, um Wasser in einer Druckflasche mit Kohlensäure anzureichern.

Dabei wird durch die Kohlensäure Druck in der Flasche erzeugt und es kommt zu dem typischen Sprudeln beim Öffnen eines unter Druck stehenden kohlensäurehaltigen Getränkes.

### Kurzbeschreibung der Zeichnungen

Die Erfindung soll im Folgenden bezugnehmend auf schematisch dargestellte Ausführungsbeispiele anhand der Zeichnungen Fig. 1 bis Fig. 7 näher erläutert werden.
Fig. 1 ist eine erste schematische Ansicht einer erfindungsgemäßen Kartusche, welche zur Verwendung in dem erfindungsgemäßen Verfahren vorgesehen ist.
Fig. 2 zeigt die Verwendung der Kartusche in einem Wasserbehälter.
Fig. 3 ist eine schematische Ansicht einer alternativen Ausführungsform einer Kartusche, welche in Segmente unterteilt ist.
Fig. 4 zeigt, wie die in Fig. 3 dargestellte Kartusche verwendet wird.
Fig. 5 zeigt die Verwendung einer erfindungsgemäßen Kartusche in einem schwerkraftbetriebenen Wasserhaushaltsfilter.
Fig. 6 zeigt die Verwendung eines Pads in einer Pressstempelkanne (French Press).
Fig. 7 zeigt eine Druckflasche, für die ebenfalls ein erfindungsgemäßes Pad oder eine Kartusche verwendet werden kann.

### Detaillierte Beschreibung der Zeichnungen

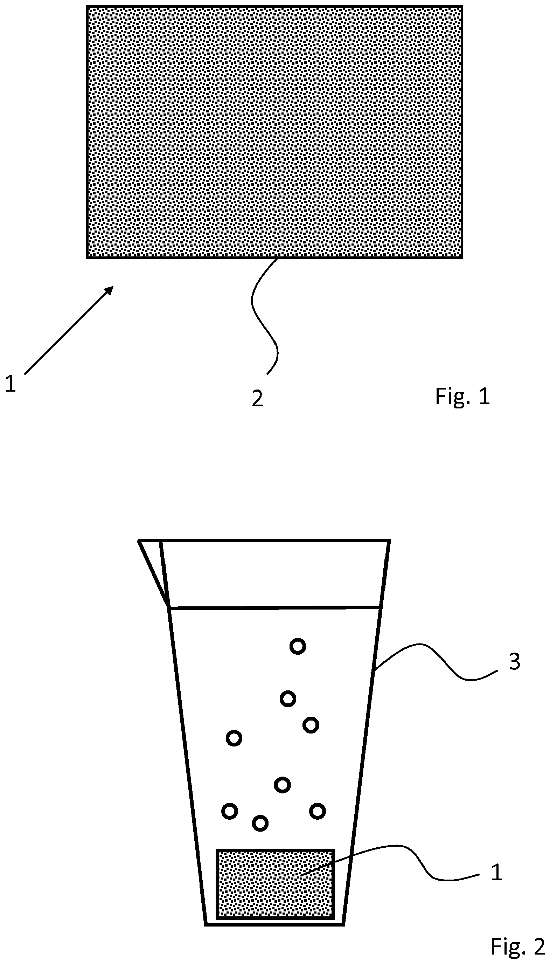

Fig. 1 zeigt in einer ersten Ansicht eine erfindungsgemäße Kartusche 1. Diese besteht in diesem Ausführungsbeispiel aus einem wasserdurchlässigen Gehäuse 2, welches mit einem Granulat eines Kationenaustauschers, insbesondere eines stark sauren Kationenaustauscherharzes, mit einem in Wasser schwerlöslichen Carbonatsalz, sowie mit einem Initiatorsalz befüllt ist.

Fig. 2 zeigt, wie die in Fig. 1 dargestellte Kartusche nunmehr in einen Wasserbehälter 3, der beispielsweise als Kanne oder als Glas ausgebildet sein kann, eingetaucht wird.

Die Kartusche 1 ist dabei derart ausgebildet, dass sie an den Boden des Wasserbehälters 3 sinkt. Die Kartusche 1 wird vom Wasser durchströmt und das Initiatorsalz löst sich im Wasser auf und aufgrund einer Säurebildung beim Austausch des Kations gegen H⁺ des Ionenaustauschers wird die Reaktion des Carbonatsalzes mit dem Ionenaustauscher beschleunigt.

Das Carbonatsalz, welches in Feststoffform vorliegt, beginnt so, sich in Anwesenheit des Ionenaustauschers sowie des gelösten Initiatorsalzes zu lösen.

Aufgrund dessen kommt es zu einer Reaktion des Ionenaustauschermaterials, bei welcher die Kationen des Salzes vom Ionenaustauschermaterial gebunden werden und wobei Kohlendioxid entsteht, welches sich seinerseits teils im Wasser auflöst und dort ein Gleichgewicht an gelöstem Kohlendioxid und Kohlensäure bildet, welches in Form von Blasen aus dem Wasserbehälter 3 austritt.

Durch die austretenden Blasen wird eine Strömung erzeugt und es wird die Durchspülung der Kartusche 1 mit Wasser gefördert.

Die Kartusche 1 ist als Einwegkartusche ausgebildet und kann nach einmaliger Verwendung entsorgt werden.

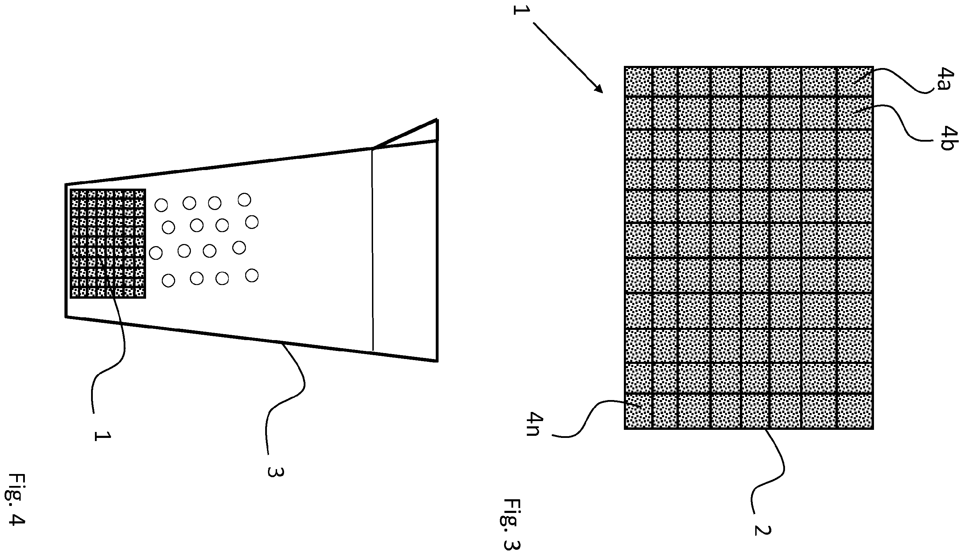

Fig. 3 zeigt eine Ausführungsform einer Kartusche 1, bei welcher das Gehäuse 2 der Kartusche in Segmente 4a - 4n unterteilt ist.

Die Segmente 4a - 4n haben die Funktion, jeweils mit Salz und Ionenaustauschermaterial befüllte Kammern zu bilden, wodurch eine gleichmäßige und verbesserte Abgabe von Kohlendioxid erzielt wird.

Wie in Fig. 4 illustriert ist, kann auch die in Fig. 3 dargestellte Kartusche 1 in einem Wasserbehälter 3 verwendet werden und sorgt gegenüber der in Fig. 1 dargestellten Kartusche für eine erhöhte und schnellere Erzeugung von Kohlendioxid.

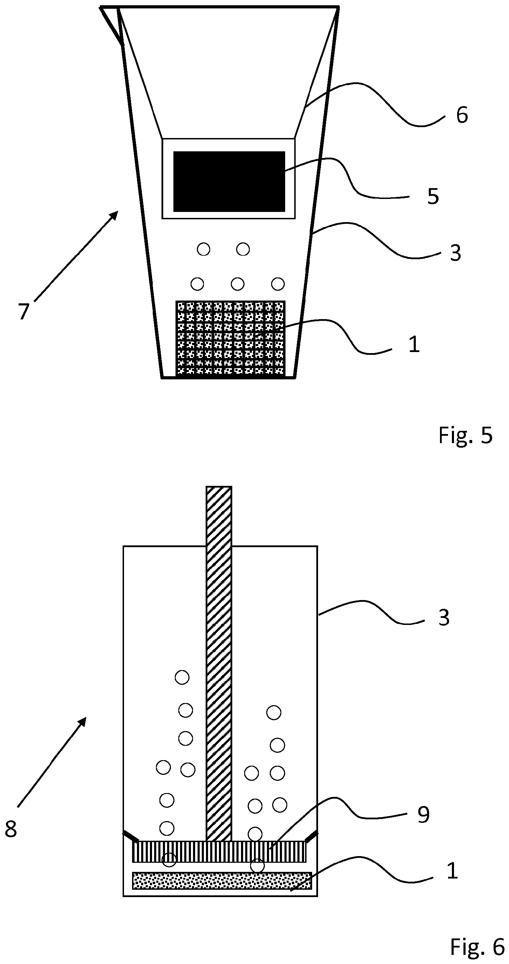

Wie in Fig. 5 dargestellt, kann bei einer Ausführungsform des Verfahrens die Kartusche 1 auch für einen schwerkraftbetriebenen Wasserhaushaltsfilter 7 verwendet werden.

Der Wasserhaushaltsfilter 7 umfasst einen Trichter 6, in welchen dichtend eine Filterkartusche 5 eingesetzt ist.

Die Filterkartusche 5 dient vorzugsweise der Enthärtung des in den Trichter 6 eingefüllten Wassers, welches die Filterkartusche 5 passiert. Hierzu ist die Filterkartusche 5 vorzugsweise mit einem Ionenaustauschermaterial befüllt.

In den Wasserbehälter 3 des Wasserhaushaltsfilters wird unterhalb des Trichters 6 die Kartusche 1 gelegt, welche auf den Boden des Wasserbehälters 3 sinkt und das aus der Filterkartusche 5 austretende Wasser mit Kohlensäure anreichert.

Fig. 6 illustriert die Verwendung eines erfindungsgemäßen Pads 1 in einer Pressstempelkanne 8.

Für die Verwendung in einer Pressstempelkanne 8, in welcher in den Wasserbehälter 3 ein Pressstempel 9 eingesetzt ist, welcher vom Benutzer herabgedrückt werden kann, ist das Pad 1 aus einem flexiblen Material, insbesondere aus einem Vlies oder einem Papier, ausgebildet.

So kann mittels des Pressstempels 9 das Pad 1 herabgedrückt und verformt werden, was deren Durchströmung und damit die Erzeugung von Kohlensäure verbessert.

In einer Pressstempelkanne (French Press) kann die Mischung aus Kationenaustauscher und Feststoff aber auch als lose Schüttung eingesetzt werden. Diese kann beispielsweise in einen aufreißbaren Beutel portionsweise bereitgestellt werden.

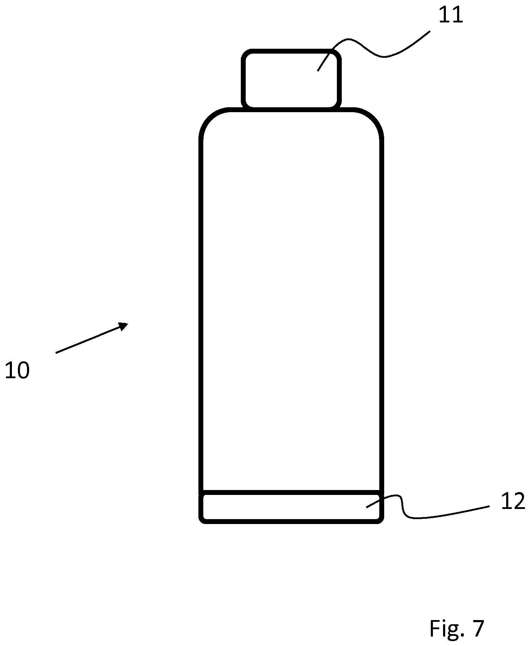

Fig. 7 zeigt schematisch die Verwendung der Erfindung, insbesondere eines zuvor beschriebenen Pads oder einer Kartusche für eine Druckflasche 10.

Die Druckflasche 10 hat einen verschließbaren Deckel 11. In dieser Ausführungsform der Erfindung hat die Druckflasche darüber hinaus einen abnehmbaren Boden 12, in welchen ein Pad oder eine Kartusche zur Anreicherung des Wassers mit Kohlensäure eingelegt werden kann.

Der Benutzer nimmt also zuerst den Boden 12 ab, legt ein Pad oder eine Kartusche ein, setzt den Boden 12 auf, befüllt die Druckflasche und verschließt diese sodann mit dem Deckel 11. Durch die sich bildende Kohlensäure wird in der Druckflasche ein Druck erzeugt und es kommt zu dem typischen Sprudeln des Getränks beim Öffnen der Druckflasche 10.

Statt über den Boden 12 kann in einer alternativen Ausführungsform Pad, Kartusche oder ein Granulat auch über den Deckel 11 eingefüllt werden.

Durch die Erfindung konnte auf sehr einfache Weise ein Einwegsystem bereitgestellt werden, mittels dessen sich kohlensäurehaltiges Sprudelwasser erzeugen lässt.

### Bezugszeichenliste

- 1: Kartusche/Pad
- 2: Gehäuse
- 3: Wasserbehälter
- 4a - 4n: Segment
- 5: Filterkartusche
- 6: Trichter
- 7: Wasserhaushaltsfilter
- 8: Pressstempelkanne (French Press)
- 9: Pressstempel
- 10: Druckflasche
- 11: Deckel
- 12: Boden

## Patentansprüche

1. Verfahren zur Erzeugung von Kohlensäure in Trinkwasser, **dadurch gekennzeichnet, dass** eine Mischung aus einem Kationenaustauscher mit einem als Carbonat ausgebildetem Feststoff verwendet wird, wobei das Carbonat in wässriger Umgebung in Anwesenheit des Kationenaustauschers, welcher sich zumindest teilweise in der H⁺-Form befindet, einem Ionenaustausch unterzogen wird und dabei unter Bildung von Kohlendioxid aufgelöst wird, und wobei neben dem Feststoff und dem Kationenaustauscher ein Initiatorsalz mit einer Löslichkeit in Wasser von über 200 g/l bei 20 °C verwendet wird, welches die Bildung von Kohlendioxid beschleunigt.

2. Verfahren nach Anspruch 1, **dadurch gekennzeichnet, dass** der Feststoff zu mindestens 5 %, bevorzugt zu > 20 % (wt%) in der Mischung vorliegt.

3. Verfahren nach einem der vorstehenden Ansprüche,
**dadurch gekennzeichnet, dass** die Mischung in einer Kartusche, in einem Pad oder als lose Schüttung in das Trinkwasser eingebracht wird.

4. Verfahren nach einem der vorstehenden Ansprüche,
**dadurch gekennzeichnet, dass** ein stark saurer oder schwach saurer Kationenaustauscher verwendet wird, welcher zu mehr als 10 %, vorzugsweise zu mehr als 30 % und besonders bevorzugt zu mehr als 80% seiner Kapazität mit Wasserstoffionen beladen ist.

5. Verfahren nach einem der vorstehenden Ansprüche,
**dadurch gekennzeichnet, dass** als Feststoff Magnesium-, und/oder Calciumcarbonat verwendet wird.

6. Verfahren nach einem der vorstehenden Ansprüche,
**dadurch gekennzeichnet, dass** das Verfahren in einer Druckflasche ausgeführt wird.

7. Kartusche oder Pad, ausgebildet zur Verwendung in einem Verfahren nach einem der vorstehenden Ansprüche, umfassend zumindest einen Kationenaustauscher, welcher sich zumindest teilweise in der H⁺-Form befindet, und zumindest einen als Carbonat ausgebildeten Feststoff, insbesondere ein Salz, welcher unter Abgabe eines Kations an den Kationenaustauscher Kohlendioxid freisetzt, und wobei die Kartusche oder das Pad auch mit einem Initiatorsalz mit einer Löslichkeit in Wasser von über 200 g/l bei 20 °C befüllt ist.

8. Kartusche oder Pad nach dem vorstehenden Anspruch,
**dadurch gekennzeichnet, dass** die Kartusche oder das Pad in Segmente unterteilt ist, wobei die Segmente jeweils mit einem Gemisch aus Kationenaustauscher und Feststoff, insbesondere Salz, befüllt sind.

9. Verwendung einer Kartusche oder eines Pad nach einem der vorstehenden Ansprüche 7 oder 8, umfassend zumindest einen Kationenaustauscher, welcher sich zumindest teilweise in der H+ -Form befindet, und
zumindest einen als Carbonat ausgebildeten Feststoff, welcher unter Abgabe eines Kations an den Kationenaustauscher Kohlendioxid freisetzt, und wobei die Kartusche oder das Pad mit einem Initiatorsalz mit einer Löslichkeit in Wasser von über 200 g/l bei 20 °C befüllt ist, als Einwegsystem zur Erzeugung von Kohlensäure haltigem Sprudelwasser.

## Claims

1. A method for producing carbonic acid in drinking water, **characterized in that** a mixture of a cation exchanger with a solid formed as carbonate is used, wherein the carbonate is subjected to an ion exchange in aqueous environment in the presence of the cation exchanger, which is at least partially in the H+ form, and is thereby dissolved by forming carbon dioxide, and wherein, in addition to the solid and the cation exchanger, an initiator salt with a solubility in water of over 200 g/l at 20°C is used, which accelerates the formation of carbon dioxide.

2. The method according to claim 1, **characterized in that** at least 5%, preferably > 20% (% by weight) of the solid is present in the mixture.

3. The method according to any one of the preceding claims, **characterized in that** the mixture is introduced into the drinking water in a cartridge, in a pad, or as lose bulk material.

4. The method according to any one of the preceding claims, **characterized in that** a strongly acidic or slightly acidic cation exchanger is used, more than 10%, preferably more than 30%, and particularly preferably more than 80% of the capacity of which is loaded with hydrogen ions.

5. The method according to any one of the preceding claims, **characterized in that** magnesium and/or calcium carbonate is used as solid.

6. The method according to any one of the preceding claims, **characterized in that** the method is carried out in a pressure bottle.

7. A cartridge or pad formed for use in a method according to any one of the preceding claims, comprising at least one cation exchanger, which is at least partially in the H+ form, and at least one solid formed as carbonate, in particular a salt, which releases carbon dioxide by discharging a cation to the cation exchanger, and wherein the cartridge or the pad is also filled with an initiator salt with a solubility in water of over 200 g/l at 20°C.

8. The cartridge or pad according to the preceding claim, **characterized in that** the cartridge or the pad is divided into segments, wherein the segments are each filled with a mixture of cation exchanger and solid, in particular salt.

9. Use of a cartridge or of a pad according to any one of the preceding claims 7 or 8, comprising at least one cation exchanger, which is at least partially in the H+ form, and at least one solid formed as carbonate, which releases carbon dioxide by discharging a cation to the cation exchanger, and wherein the cartridge or the pad is filled with an initiator salt with a solubility in water of over 200 g/l at 20°C, as disposable system for producing sparkling water containing carbonic acid.

## Revendications

1. Procédé de production de gaz carbonique dans l'eau potable, **caractérisé en ce qu'**un mélange composé d'un échangeur de cations avec un solide sous forme de carbonate est utilisé, le carbonate dans un environnement aqueux en présence de l'échangeur de cations qui se trouve au moins en partie sous la forme H⁺, étant soumis à un échange d'ions et ainsi dissout avec la formation de dioxyde de carbone, et un sel amorceur avec une solubilité dans l'eau de plus de 200 g/l à 20°C, qui accélère la formation de dioxyde de carbone, étant utilisé en plus du solide et de l'échangeur de cations.

2. Procédé conformément à la revendication 1, **caractérisé en ce que** le solide est présent dans le mélange au moins à 5%, préférablement à > 20% (wt%).

3. Procédé conformément à l'une des revendications précédentes, **caractérisé en ce que** le mélange est introduit dans une cartouche, dans un tampon ou déversé en vrac dans l'eau potable.

4. Procédé conformément à l'une des revendications précédentes, **caractérisé en ce qu'**un échangeur de cations fortement acide ou faiblement acide est utilisé, lequel est chargé en ions d'hydrogène à plus de 10%, préférablement à plus de 30% et en particulier préférablement à plus de 80% de sa capacité.

5. Procédé conformément à l'une des revendications précédentes, **caractérisé en ce que** le carbonate de magnésium et/ou de calcium est utilisé sous forme de solide.

6. Procédé conformément à l'une des revendications précédentes, **caractérisé en ce que** le procédé est réalisé dans une bouteille sous pression.

7. Cartouche ou tampon formé pour une utilisation dans un procédé conformément à l'une des revendications précédentes, comprenant au moins un échangeur de cations qui se trouve au moins en partie sous la forme H⁺, et au moins un solide sous forme de carbonate, en particulier un sel, qui libère du dioxyde de carbone avec la délivrance d'un cation à l'échangeur de cations, et la cartouche ou le tampon étant également rempli d'un sel amorceur avec une solubilité dans l'eau de plus de 200 g/l à 20°C.

8. Cartouche ou tampon conformément à la revendication précédente, **caractérisé en ce que** la cartouche ou le tampon est divisé en segments, les segments étant respectivement remplis d'un mélange d'échangeur de cations et de solide, en particulier de sel.

9. Utilisation d'une cartouche ou d'un tampon conformément à l'une des revendications précédentes 7 ou 8, comprenant au moins un échangeur de cations qui se trouve au moins en partie sous la forme H⁺ et au moins un solide sous forme de carbonate qui libère du dioxyde de carbone avec la délivrance d'un cation à l'échangeur de cations, et la cartouche ou le tampon étant rempli d'un sel amorceur avec une solubilité dans l'eau de plus de 200 g/l à 20°C, comme système à usage unique pour la production d'eau gazeuse contenant du gaz carbonique.
